# EUROPEAN PATENT APPLICATION

(11) **EP 1 225 506 A2**
(43) Date of publication of application: **24.07.2002**
(21) Application number: 02250058.1
(22) Date of filing: 07.01.2002
(51) Int. Cl.: G06F 3/033

(54) **System for displaying a keyboard**

(30) Priority: 05.01.2001 GB 0100278
(71) Applicant: RESEARCH MACHINES PLC, Milton, Abingdon, Oxon OX14 4SE (GB)
(72) Inventor: Tricklebank, Stuart, Headington, Oxford OX3 7EY (GB)
(74) Representative: Loveless, Ian Mark

(57) **Abstract**

A system for displaying a keyboard on a display has a context function for determining the type of input required by a user. Depending upon the type of entry box selected by a user, a keyboard appropriate to the data to be entered is presented.

## Description

### FIELD OF THE INVENTION

The present invention relates to displaying a virtual "on-screen" keyboard. In particular, the invention relates to displaying an on-screen keyboard in a teaching system such as for use with an electronic white board.

### BACKGROUND OF THE INVENTION

To date, computers have been used in education in three ways. The first, to support the teaching process by enabling the teacher and/or student to access and use discrete resources, for example: to access the Internet, to compile and publish a document, to access a resource such as specific software to evaluate a student's ability. The second way, has been to provide independent learning systems or remote computer assisted teaching systems which allow the student to learn in a one to one situation (i.e. themselves and the computer) on their own. Sometimes there is a teacher interaction, but this is done on a discrete and remote basis. It is the student themselves that is setting the pace and driving the system. The third way is predominantly used as a distance learning tool where a teacher can put together a set of activities and distribute these to individual or group students.

With further developments in computing technology, there are a variety of ways of presenting material to students. These include documents, graphics, the Internet and video clips.

However, these different ways of presenting content, whilst of assistance to a teacher, create an extra burden on teachers to plan lessons and adequately record data describing activities that have been undertaken to ensure that the students have been taught all the required subject matter.

### SUMMARY OF THE INVENTION

We have appreciated that when presenting material on a large display screen, those presenting that material, such as teachers, need to have a simple way to operate an on-screen keyboard. In particular, we have appreciated that the inputs required on an on-screen keyboard vary depending upon the subject matter being taught.

Accordingly, in a broad respect the invention provides a means by which the required part of the virtual on-screen keyboard is automatically displayed and removed by the system based on the type of text input required. For example, if numeric-text input is needed, the system will display the numeric segment of a virtual keyboard automatically; when no text input is required, the virtual keyboard is automatically removed by the system.

In the particular there is provided, a system for displaying an interactive keyboard on a display comprising a context function for determining the type of input required by a user depending upon the type of entry box selected and a display handler for generating an image of a keyboard with keys presented according to the type of entry box selected.

The computer system is designed for use on electronic whiteboards and automatically manages the display and removal of the virtual or 'on-screen' keyboards based on the type of text input required by the active text-entry box. The keyboard is interactive in the sense that selecting keys on the displayed keyboard initiates a corresponding input to the system.

The context function is provided, for example, by analysing the type of text entry box displayed and presenting this result to a virtual keyboard handler.

The invention is defined in the claims to which reference is now directed.

### BRIEF DESCRIPTION OF THE FIGURES

An embodiment of the invention will now be described, by way of an example only, and with reference to the accompanying figures in which:
- Figure 1:: shows the operations when a user selects a new text-entry box;
- Figure 2:: shows the functions performed when a text entry box is removed by a user;
- Figure 3:: shows the functions performed when a text entry box is made active;
- Figure 4:: shows the functions performed by a virtual keyboard handler;
- Figure 5:: shows the functions performed when a user selects a key on the virtual keyboard;
- Figure 6:: shows how messages are sent from the virtual keep pad to an application; and
- Figure 7:: shows the functions of one particular message.

### DESCRIPTION OF A PREFERRED EMBODIMENT OF INVENTION

The embodiment is intended for use in primary school whole class teaching mathematics teaching using an electronic whiteboard. The system allows the required part of the virtual 'on-screen' keyboard to be automatically displayed when text input of a certain type is required. When numeric input is required, the numeric pad on the virtual keyboard is automatically displayed. If only text is required, the main part of the virtual keyboard is automatically displayed.

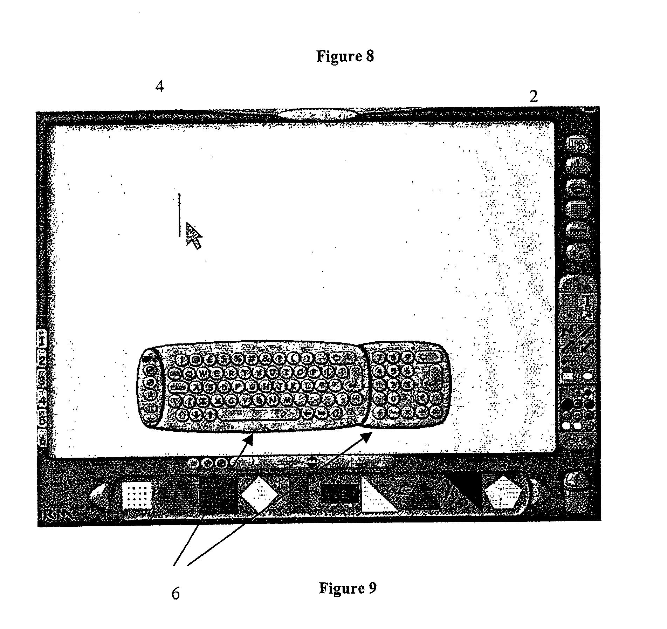

A virtual keyboard or keypad keyboard is shown in figures 8 and 9. In figure 8, the virtual keyboard 6 comprises a numeric pad only 4. In contrast, in figure 9 the keyboard 6 comprises a text keyboard and a number keyboard.

To determine the appropriate keyboard to display to the user, a function is provided to monitor which text box is being displayed to the user at any given time. The system monitors which text-entry box is currently active and uses the type of text-input which the entry box requires to determine which part of the keyboard to display. When text-input is not required, the virtual 'on-screen' keyboard is automatically removed to keep the screen uncluttered.

For example, in figure 8, the active text-entry box is 'Start', which required numeric input. As a result, the numeric-pad of the keyboard is automatically displayed. In figure 9, the active text entry is the system's work-area that can accept alphanumeric input and therefore both parts of the virtual 'on-screen' keyboard are displayed automatically.

The embodying system was created using Microsoft Visual C++ 6.0 (SP3) and designed to run on MS Windows 9X/2000/NT. MFC AppWizard was used to create an initial Document/View application. The application runs full-screen, which was achieved by removing the 'titlebar' from the 'Main Frame' of the application and setting its size and position to fill the screen.

The applications screen (shown in figures 8 and 9) is made up of a work-area 2 and a set of toolbars positioned around it. All elements of the user interface (the 'workarea' and the 'buttons') are made up of a group of basic object-oriented graphic primitives called ScreenItems which can be positioned, hit-tested etc. The ScreenItem class is an interface class, which is sub-classed to provide functionality for a large array of object-oriented drawing primitives such as sprites, text, lines, rectangles etc

Broadly, the virtual on-screen keyboard 6 is an object which has a class derived from a ScreenItem with extra code for generating keyboard messages so that it appears to perform like a conventional keyboard.

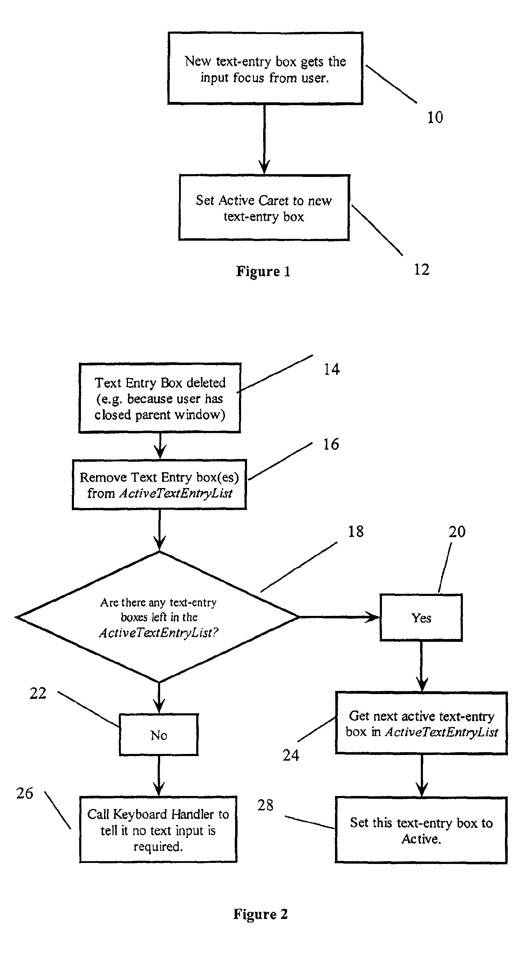

Figure 1 shows what happens when the user selects a new text-entry box. When the user selects a new entry box 10 this fact is recorded and an active caret 12 is set.

Figure 2 shows what happens when one of the text-entry boxes is removed 14 from the screen - e.g. because the user has closed a window to which the entry box belongs. The *AckiveTextEntryList* is a list, which contains pointers to the text-entry boxes in the software in the order in which they should obtain input focus. This is used to determine which text entry box should get input focus if the current active text-entry box is deleted. The text entry box is removed from the active text entry list 16. At step 18 it is determined whether there are any text entry boxes left in the active text entry list 16. If yes 20, at step 20 the next active text entry box is chosen, and at step 28 this text entry box is made active. If no 22, then at step 26 a keyboard handler is called.

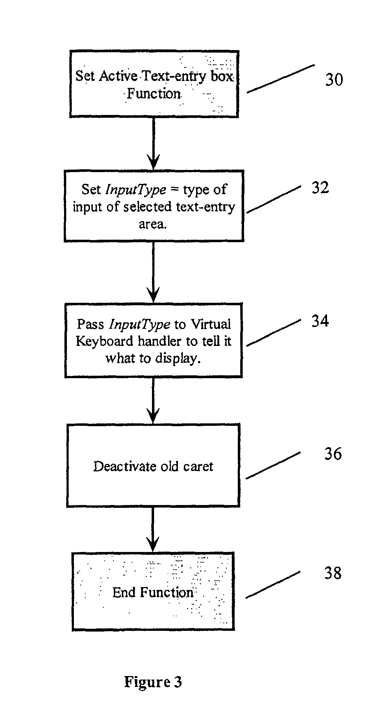

Figure 3 illustrates what happens when a text-entry box is made active (or is about to get keyboard input focus). At step 30 the text entry function is made active. At step 32 the input type is noted. This input type is then passed to a virtual keyboard and to tell it what to display at step 34. At 36 the old caret is deactivated. The function ends at step 38. This is one aspect of the context function of the invention.

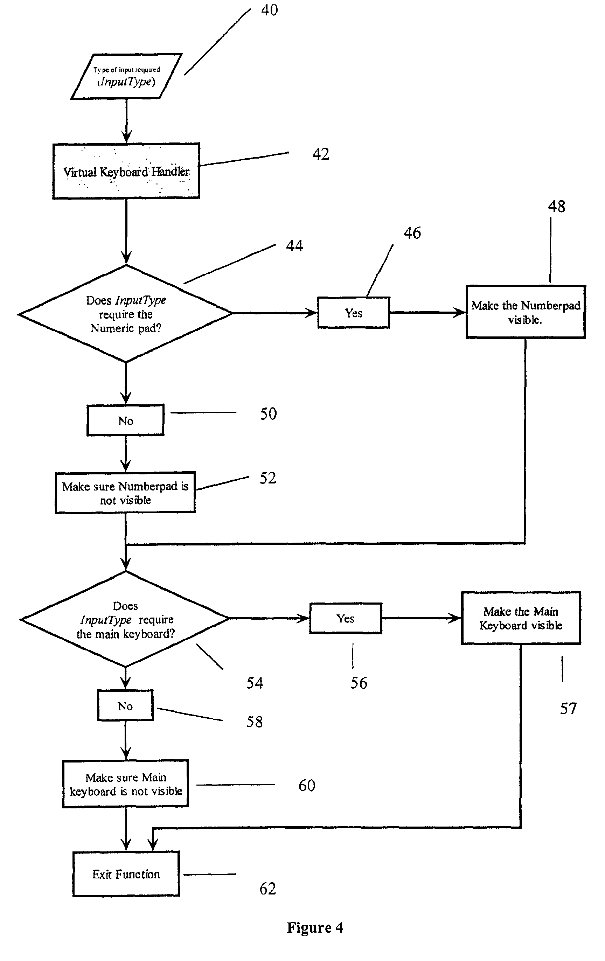

Another aspect of the context function is shown in figure 4. Figure 4 shows what happens when the keyboard handler is told what type of text input is required. The input type determined at step 34 in the figure 4 is passed to the keyboard and handler 42 at step 40. At step 44 it is determined whether the numeric keypad is required. If yes 46 the number pad is made of visible at 48. If no 50, the number pad is made not visible at step 52. If the input requires a main keyboard 54 this is made of visible at step 57 stop if not 58, the main keyboard is made not visible at step 60 and finally the function ends at step 62.

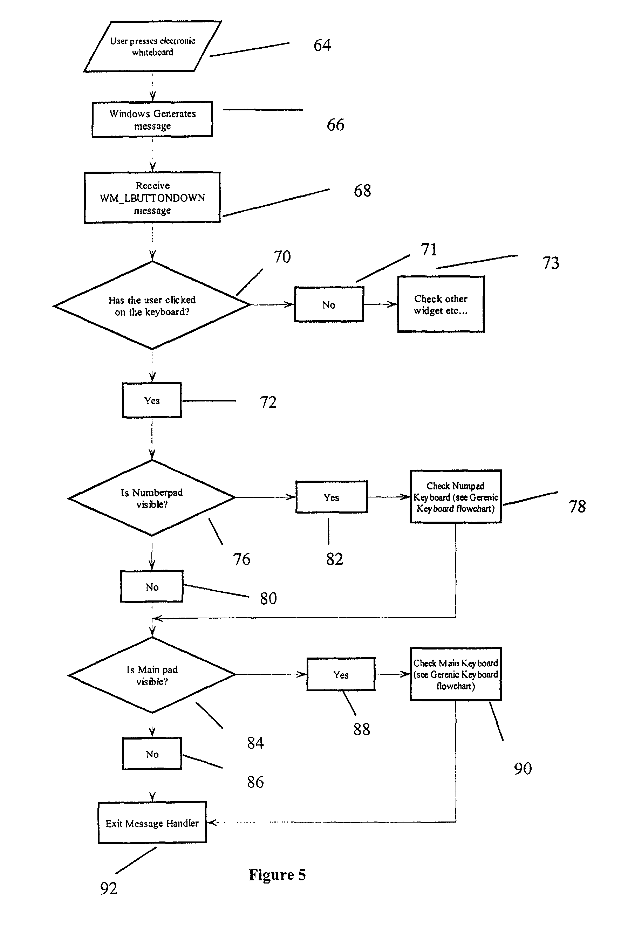

Figure 5 shows what happens when the user clicks on one of the keys on the virtual 'on-screen' keyboard. When a user presses a key on the electronic whiteboard 64 a message is generated 66 and created at 68. At step 70 it is determined whether the user has clicked on the keyboard. If no 71 then other items are checked 73. If yes 72, the number pad is made visible 76. If no, 80 and the main pad is visible at 84, at step 88 and the main keyboard is checked at step 90. If the main keyboard is not visible at step 86 the message handler is exited at step 92.

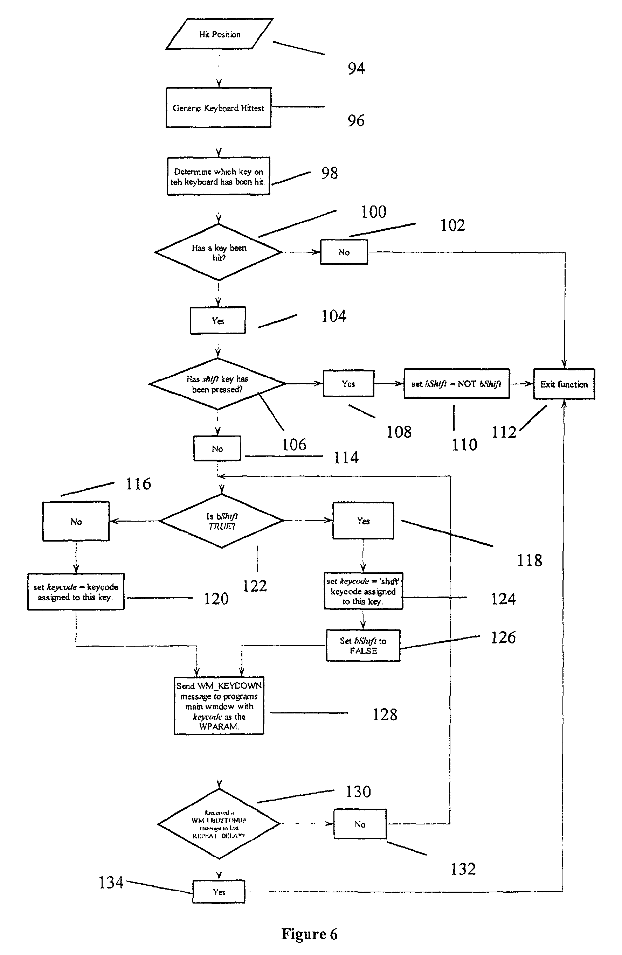

Figure 6 illustrates how each separate virtual-keypad is tested for a 'key-press' and how it generates a windows key-press message (WM_KEYDOWN) to send to the rest of the application. At step 94 a position is pressed on the screen. At step 96 the generic keyboard test is initiated. At step 98 it is determined which key is being hit. If no key has been hit 100, at step 102 the function is exited. If a key has been hit 104, a check is made at 26 to determine whether the shift key has been pressed. If no 114, it is determined whether the shift is true 122. If yes 118, then the key shift is assigned to the key 124. If no 116, then the key code is the key code assigned to the key 120. The key message is sent to a program at step 128 and a check made at step 130 if the key WMLbuttonUp message was received from the operating system, then go to step 134 (the virtual key has been released). If the message hasn't been received, go to step 132. This enables character repeats.

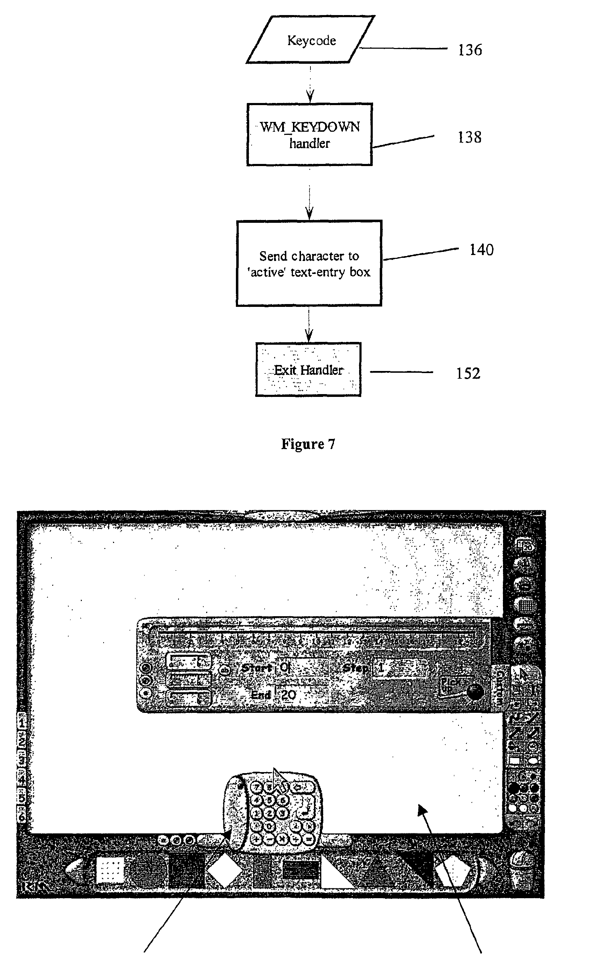

Figure 7 outlines what happens when a WM_KEYDOWN message is received, either from the virtual on-screen keyboard or a conventional keyboard. At step 136 the keycode is received and at step 138 the key down handler operates. At step 140 the character is sent to the active text entry box. Lastly, at step 152 the handler is exited.

## Claims

1. A system for displaying an interactive keyboard on a display comprising a context function for determining the type of input required by a user depending upon the type of entry box selected and a display handler for generating an image of a keyboard with keys presented according to the type of entry box selected.

2. A system according to claim 1, wherein the context function comprises a virtual keyboard handler.

3. A system according to claim 1 or 2, wherein the context function includes detecting a parameter indicating the input type required.

4. A system according to any preceding claim, wherein the keyboard displayed is either numeric or textual depending upon the type of input required.

5. A method of displaying an interactive keyboard on a display comprising determining the type of input required by a user depending upon the type of entry box selected, and presenting the keyboard with appropriate input the keys depending upon the type of input required.

6. A method according to claim 5, wherein the step of determining the input type comprises extracting an input type parameter.

7. A method according to claim 5 or 6, wherein the keyboard displayed is either numeric or textual depending upon the type of input required.

8. A computer program product having stored thereon computer code which when executed on a computer undertakes the method according to any of claims 5 to 7.
